(19) Europäisches Patentamt

European Patent Office

Office européen des brevets

(11) **EP 1 325 271 B1**

(12) **EUROPEAN PATENT SPECIFICATION**

(45) Date of publication and mention
of the grant of the patent:
**26.07.2006 Bulletin 2006/30**

(51) Int Cl.:
**F25D 11/02** *(2006.01)*    **F25D 29/00** *(2006.01)*

(21) Application number: **01981295.7**

(22) Date of filing: **04.10.2001**

(86) International application number:
**PCT/TR2001/000050**

(87) International publication number:
**WO 2002/031419 (18.04.2002 Gazette 2002/16)**

(54) **REFRIGERATING APPARATUS CONTROL METHOD**

VERFAHREN ZUR STEUERUNG EINES KÄLTEGERÄTES

PROCEDE DE COMMANDE DE REFRIGERATEUR

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **11.10.2000 TR 200002961**

(43) Date of publication of application:
**09.07.2003 Bulletin 2003/28**

(73) Proprietor: **Arcelik A.S.**
**81719 Istanbul (TR)**

(72) Inventors:
• **GÜLDALI, Yalçin,**
**Arçelik A.S.**
**81719 Istanbul (TR)**

• **ARISOY, Emre,**
**Arçelik A.S.**
**81719 Istanbul (TR)**
• **ATILLA, Yüksel,**
**Arçelik A.S.**
**81719 Istanbul (TR)**
• **YÜKSEL, Mustafa,**
**Arçelik A.S.**
**81719 Istanbul (TR)**

(74) Representative: **Zinsinger, Norbert et al**
**Louis Pöhlau Lohrentz,**
**P.O. Box**
**90014 Nürnberg (DE)**

(56) References cited:
**EP-A- 0 949 467**     **EP-A- 0 967 449**
**EP-A- 0 976 996**     **GB-A- 2 254 452**
**US-A- 4 292 813**     **US-A- 5 467 265**

## Description

The present invention relates to a control method that enables a refrigerating apparatus to give optimal cooling performance, regardless of ambient temperature variations.

A control method for a refrigerating appliance is known from EP 0949467.

The domestic type of refrigators usually consist of two separate compartments maintained at different temperatures, namely the freshfood and the freezer compartments. The freshfood compartment is preferably used for the storage of fresh foods, whereas the freezer compartment is used for the storage of frozen food. In the state of art, the cooling performance of a refrigerating apparatus with said two compartments maintained at different temperatures, is provided by different refrigerating circuits for each compartment. Such refrigerating appliances have high manufacturing costs.

Said refrigerating appliances having two compartments held at different temperatures may also employ a unitary refrigeration circuit and a temperature sensor disposed in the freshfood compartment in order to provide cooling. In the refrigerators where cooling is attained by taking the freshfood compartment temperature as reference, the main problem arises when the ambient temperature is lower than a pre-determined value. In this case, the heat gain of the refrigerator compartment is considerably low, and the operational rate of the compressor decreases, which in turn adversely effects the cooling efficiency of the freezer compartment. During the long inoperative periods of the compressor, the temperature in the freezer compartment rises above the desired temperature value which consequently leads to shortening of the storage lives of the frozen food or to a deterioration of food contained in the freezer compartment. In order to overcome said problem, a heater element is placed in the freshfood compartment of the refrigerating appliance. In cases when the ambient temperature is below a pre-determined value, said heater is actuated in order to raise the temperature of the freshfood compartment and to operate the compressor. In this practice, in cases when the ambient temperature is low and the compressor is left inoperative for a long time, temperature fluctuations are observed in both compartments. Furthermore, the rising of the freezer compartment temperature above a predetermined value, cannot be avoided.

In French Patent No. 2254762, refrigerating appliances with two compartments held at different temperatures, that employ a single refrigeration circuit and a temperature sensor placed in the freshfood compartment, are disclosed. In said technique, better operational conditions are provided for the compressor by actuating the heater element when the compressor is in an inoperative state, in order to eliminate the above mentioned problems. This method causes a high energy consumption as the heater is operated also in cases when the ambient temperature is high. In Italian Patent No. 1027733, in order to overcome this shortcoming, the heater element is switched off by a manual control when the ambient temperature is relatively high. This technique is not considered to be precise enough, as it requires a personal intervention by the user, i.e. it is user-dependent.

Another implementation of the technique is disclosed in the French Patent No. 2347634, wherein a temperature sensor is mounted on external surface the refrigerating apparatus to detect the ambient temperature. However this technique is quite complicated and can easily be affected by the variations in the ambient temperature. Moreover, due to the temperature sensor mounted externally on the refrigeration apparatus, the production cost increases.

In the European Patent Application No. 0388726, a timer is incorporated to the system in order to decrease undesired energy consumption. The temperature is detected by means of a sensor placed in the freshfood compartment. If the inoperative period of the compressor is shorter than the pre determined delay, the heater is not activated, so that any unnecessary energy consumption will be avoided. In cases when the ambient temperature is low, the inoperative period of the compressor is shorter than the pre determined delay, the heater is not activated, so that any unnecessary energy consumption will be avoided. In cases when the ambient temperature is low, the inoperative period of the compressor is longer than the predetermined delay, and the heater element is actuated. Although this technique is simple and more efficient as compared to the other techniques, as heating process is started after a certain delay period, heaters with relatively high outputs are required and also space requirements arise due to the volume of the heater element; and these drawbacks result in local overheating phenomena within the compartment.

With a view to overcoming such shortcomings seen in the EP Application No. 0388726, in the EP Application No. 0484860, the heater is directly actuated in case the operating period of the compressor is shorter than a pre-determined minimum value, and the heater keeps on running until the compressor is actuated. In this implementation, the heater is unnecessarily actuated even when it is not required, thus causing an increase in energy consumption.

EP 0949467 discloses a method of controlling a refrigerating appliance with at least two different compartment temperatures thermally separated from one another and with a compressor, which loads with refrigerant at least two evaporators arranged one after the other in series connection and serving for cooling of the refrigerating compartments and which is controlled by a regulator element, which is arranged in a compartment of higher temperature, for maintenance of the intended compartment temperature, of which the compartment temperature in the compartment of higher temperature can be influenced by a heating element, wherein an electronic control unit is provided, which compares at least one target value, which is filed in a data memory, with an actual value, which results from the mode of operation of the compressor, and when the target value is fallen below or exceeded delivers a control signal by which the heating device is placed in operation.

The object of the present invention is to realize a control method that enables a refrigerating appliance to provide an optimum cooling performance, regardless of the ambient temperature variations.

The refrigerating appliance control method, realized to attain the above mentioned object of the present invention has been illustrated in the attached drawings, wherein:

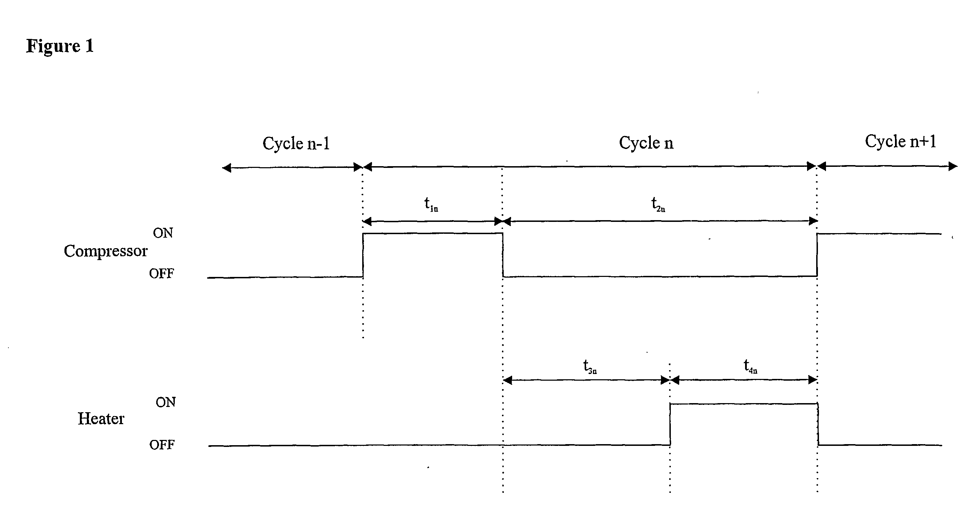

Figure 1, is the graphical presentation showing the operative periods of the heater and the compressor,

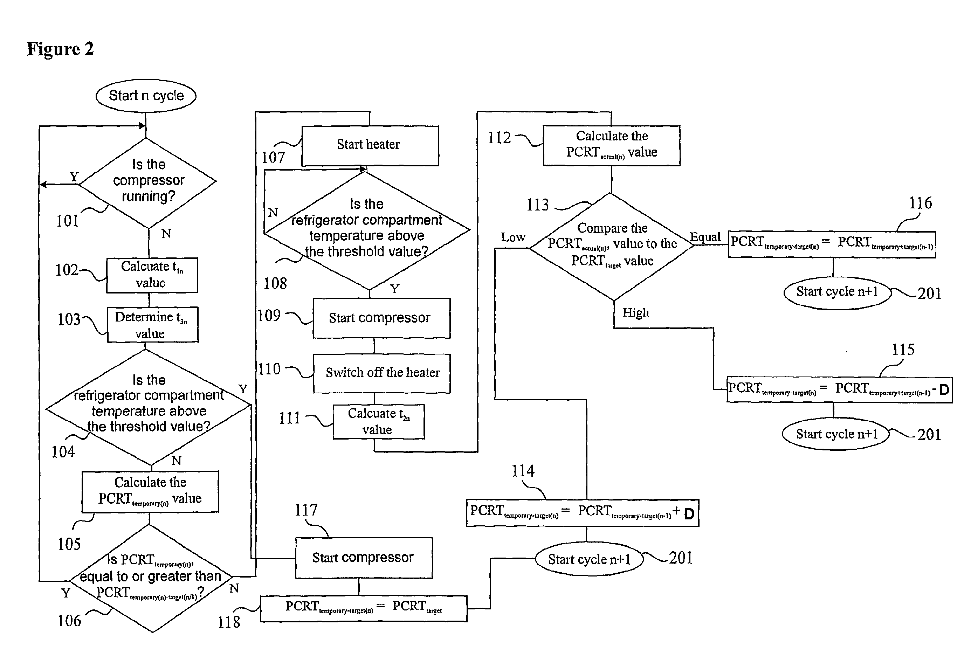

Figure 2, is the flow chart of the refrigeration appliance control method,

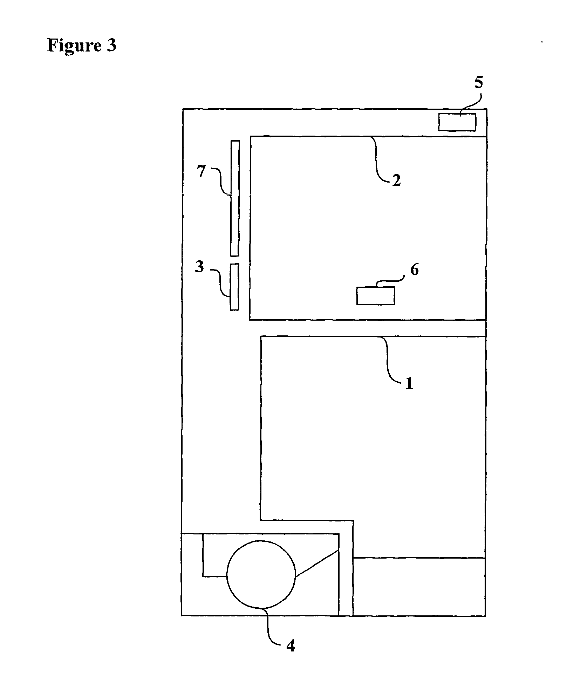

Figure 3, is the schematical cross-section view of the refrigeration appliance.

The components shown in the drawings are separately given reference numerals as follows :

1. Freshfood compartment
2. Freezer compartment
3. Heater
4. Compressor
5. Control Unit
6. Temperature Sensor
7. Evaporator

The refrigerating apparatus of the present invention, comprises a freshfood compartment (1), a freezer compartment (2), a compressor (4) that compresses and circulates the refrigerant fluid, a temperature sensor (6) placed in the freshfood compartment (1), a heater element (3) placed in the freshfood compartment (1) and a control unit (5) to direct and control all the other components. The cooling operation is performed by taking as reference, the temperature of the freshfood compartment (1). In such refrigerating appliances, the heat gain in the freshfood compartment (1) is quite low, at low ambient temperatures. In this case, the temperature of the freshfood compartment (1) is used and the compressor (4) is re-actuated by switching on the heater (3) in order to avoid the unnecessary long inoperative state of the compressor (4) and the rising of the freezer compartment (2) temperature above the desired temperature value. In the method of the present invention, the moment for the actuation of the heater (3) is dynamically determined, depending on the operating rate of the compressor (4).

In this method, the operational cycle of the refrigerating appliance is determined as the time period starting from the actuation of the compressor (4), until it re-starts following an inoperative stage.

Here, n is the number of cycles,

$t_{1n}$ : the compressor (4) run time at the nth cycle

$t_{2n}$ ; time spent for re-starting after the inoperative period of the compressor (4) at the nth cycle

$t_{3n}$ : time period spent at then nth cycle after the compressor stopped

$t_{4n}$ : the heater (3) run time at the nth cycle

PCRT (Percent Compressor Run Time) shows the compressor (4) operative rate;

$PCRT_{target}$, is a determined constant value showing the compressor operative rate target value which is determined by the manufacturer as the result of the experimental studies.

$PCRT_{temporary-target(n)}$, is the target compressor (4) operative rate that dynamically varies at the nth cycle

$PCRT_{temporary(n)}$, is the momentary compressor (4) operative rate after it stops and until the heater (3) is switched on, at the nth cycle

$$PCRT_{temporary(n)} = t_{1n} / (t_{1n} + t_{3n})$$

$PCRT_{actual(n)}$, is the compressor (4) operative rate realized during the nth cycle

$$PCRT_{actual(n)} = t_{1n} / (t_{1n} + t_{2n}),$$

$\Delta$, is the constant correction factor determined by the manufacturer and used for dynamically increasing/decreasing the $PCRT_{temporary-target(n)}$ value, in line with the operational conditions and the refrigerating appliance performance.

When the refrigerating appliance is initially started, the $PCRT_{temporary-target(0)}$ value is equalized to the $PCRT_{target}$ value. The steps employed in the refrigerating appliance control procedure are the same in all operational cycles with the exception of this operation. As an example, the steps comprised in the operational cycle n, are given below:

In the nth operational cycle of the refrigerating appliance, the operation of the compressor (4) is checked and upon the completion of the compressor (4) run, its run time ($t_{1n}$) is calculated by the control unit (5) (102). Then, the time ($t_{3n}$) spent after the stopping of the compressor (4) is determined as a momentary value (103). During these processes, the freshfood compartment (1) temperature as measured by the temperature sensor (6) is transmitted to the control unit (5) (104). If the freshfood compartment (1) temperature is above a threshold value as defined by the manufacturer (104), the compressor (4) starts to run (117), the $PCRT_{temporary-target(n)}$ value equalized to the $PCRT_{target}$ value (118) and the "n+1"th operational cycle starts (201). If the freshfood compartment (1) temperature is below a threshold value as defined by the manufacturer (104) the $PCRT_{temporary(n)}$ value is calculated by using the values of compressor (4) run time ($t_{1n}$) and the time ($t_{3n}$) spent

after the stopping of the compressor (4) and is compared to the $PCRT_{temporary-target(n-1)}$ value (106).

In case the $PCRT_{temporary(n)}$ value is greater than or equal to the $PCRT_{temporary-target(n-1)}$ value (106) as the compressor operation rate at the related cooling cycle is above the target level ($PCRT_{temporary-target(n-1)}$), the heater (3) is not switched on and the processes continue, starting from the step (101) where the compressor (4) run time ($t_{1n}$) is measured by the control unit (5).

When the $PCRT_{temporary(n)}$ value is smaller than the $PCRT_{temporary-target(n-1)}$ value (106), as the target could not be achieved, the heater (3) is actuated by the control unit (5). The freshfood compartment (1) temperature as measured by the temperature sensor (6) is transmitted to the control unit (5). After a certain period, following the activation of the heater (3), the freshfood compartment (1) temperature rises and when it attains a value above a threshold value (108) as determined by the manufacturer, the control unit (5) actuates the compressor (4) (109) and switches off the heater (3) (110). Thus, the nth cooling cycle is completed.

At the moment when the compressor (4) starts the next (n+1) operation cycle, the time ($t_{2n}$) spent for the re-starting of the compressor (4) after it stopped, at the end of the nth cycle (111) is calculated. At the same time, the $PCRT_{actual(n)}$ value is calculated (112) and the $PCRT_{actual(n)}$ value is compared to the $PCRT_{target}$ value (113).

If the $PCRT_{actual(n)}$ value is smaller than the $PCRT_{target}$ value (113), the time ($t_{2n}$) spent for the re-starting of the compressor (4) after it stopped is longer than the target value and in relation with this time, the $PCRT_{actual(n)}$ value decreases. During the time ($t_{2n}$) spent for the re-starting of the compressor (4) after it stopped, the refrigerating appliance does not perform a cooling operation. Therefore said ($t_{2n}$) time has to be shortened so that the compressor (4) is actuated earlier. For this reason, the $PCRT_{temporary-target(n)}$ value is calculated (114) by adding the '$\Delta$' value as determined by the manufacturer, to the $PCRT_{temporary-target(n-1)}$ value. In this case, the $PCRT_{temporary-target(n)}$ value increases at a $\Delta$ value and the heater (3) is activated faster, if required, in the next cycle and the compressor (4) is actuated earlier.

If the $PCRT_{actual(n)}$ value is greater than the $PCRT_{target}$ value (113), the time ($t_{2n}$) spent for the re-starting of the compressor (4) after it stopped is shorter than the target value and in relation with this time, the $PCRT_{actual}(n)$ value increases. As the time ($t_{2n}$) spent for the re-starting of the compressor (4) after it stopped decreases, the compressor (4) runs for a longer time which in turn leads to an increase in the energy consumption. Hence, to elongate the time ($t_{2n}$) and to avoid the compressor (4) from running more than the determined rate, the heater (3) has to be actuated later. For this purpose, the $PCRT_{temporary-target(n)}$ value is calculated (115) by subtracting the '$\Delta$' value as determined by the manufacturer from the $PCRT_{temporary-target(n-1)}$ value. In this case, the $PCRT_{temporary-target(n)}$ value decreases at a $\Delta$ value and the heater (3) actuation period is elongated so that the compressor (4) starts with a certain delay.

In case the $PCRT_{actual(n)}$ value is equal to the $PCRT_{target}$ value (113) the compressor (4) runs at an optimum rate and the $PCRT_{temporary-target(n)}$ value is equalized to the $PCRT_{temporary-target(n-1)}$ value (116).

**Claims**

1. A refrigerating appliance control method for a refrigerating appliance that performs the cooling operation by taking the temperature of the freshfood compartment (1) as a reference, the method comprises the steps of:

    checking the compressor (4) run at the nth cycle of the refrigerating appliance (101) and calculation of the compressor (4) run time ($t_{ln}$) (102) upon the completion of the compressor run, and of the time ($t_{3n}$) value as time spent after the compressor has stopped (103), by a control unit (5);
    transmission of the freshfood compartment (1) temperature measured by a temperature sensor (6) to the control unit (5), and if the freshfood compartment (1) temperature is above a threshold value as defined by the manufacturer (104), activating the compressor (4) (117);
    equalizing the percent compressor run time $PCRT_{temporary-target(n)}$ value which is the target compressor (4) operative rate that dynamically varies at the nth cycle to the $PCRT_{target}$ value (118) being the target compressor operational rate as pre-determined by the manufacturer, and starting of the 'n+1' th operation cycle (201);
    if the freshfood compartment (1) temperature is below a threshold value as defined by the manufacturer (104), calculating the $PCRT_{temporary(n)}$ value which is the momentary compressor (4) operative rate after it stops and until a heater (3) is switched on, at the nth cycle, by using the values of compressor (4) run time ($t_{1n}$) and the time ($t_{3n}$) spent after the stopping of the compressor (4) and comparing the $PCRT_{temporary(n)}$ value to the $PCRT_{temporary-target(n-1)}$ value (106);
    in case the $PCRT_{temporary(n)}$ value is greater than or equal to the $PCRT_{temporary-target(n-1)}$ value (106), returning to the step (101) where the compressor (4) run time ($t_{1n}$) is measured by the control unit (5);
    when the $PCRT_{temporary(n)}$ value is smaller than the $PCRT_{temporary-target(n-1)}$ value (106), actuation of the heater (3) by the control unit (5) (107);
    after a certain period, following the activation of the heater (3) when the freshfood compartment (1) temperature rises and when it attains a value above a threshold value (108) as determined by the manufacturer, activation of the compressor (4) (109) and switching off of the heater (3) by the control unit (5) (110);

calculating the time ($t_{2n}$) spent for the re-starting of the compressor (4) after it stopped (111);

calculating the $PCRT_{actual(n)}$ value (112), which is the compressor (4) operative rate realized during the nth cycle and comparing the $PCRT_{actual(n)}$ value to the $PCRT_{target}$ value (113) which is a determined constant value showing the compressor operative rate target value which is determined by the manufacturer as the result of experminental studies;

in case the $PCRT_{actual(n)}$ value is equal to the $PCRT_{target}$ value (113), equalization of the $PCRT_{temporary-target(n)}$ value to the $PCRT_{temporary-target(n-1)}$ Value (116);

if the $PCRT_{actual(n)}$ value is smaller than the $PCRT_{target}$ value (113), adding a constant correction factor '$\Delta$' as determined by the manufacturer to the $PCRT_{temporary-target(n-1)}$ value (114) and increasing the $PCRT_{temporary-target(n)}$ value at a $\Delta$ value, providing a faster activation of the heater (3) in the next (n+1) cycle, thus leading to an earlier actuation of the compressor (4);

if $PCRT_{actual(n)}$ value is greater than the $PCRT_{target}$ value (113), subtracting the '$\Delta$' value as determined by the manufacturer from the $PCRT_{temporary-target(n-1)}$ value (115), decreasing the $PCRT_{temporary-target(n)}$ value at a $\Delta$ value, providing a slower activation of the heater (3) in the next (n+1) cycle, thus leading to a delayed actuation of the compressor (4).

2. A refrigerating appliance control method according to Claim 1, wherein the $PCRT_{temporary(n)}$ value is calculated by dividing the value $t_{1n}$ by the sum of ($t_{1n}$ + $t_{3n}$).

3. A refrigerating appliance control method according to Claim 1, wherein the $PCRT_{actual(n)}$ value is calculated by dividing the value $t_{1n}$ by the sum of ($t_{1n}$ + $t_{2n}$).


**Patentansprüche**

1. Verfahren zur Steuerung eines Kältegeräts für ein Kältegerät, das den Kühlvorgang durch Nehmen der Temperatur des Frischlebensmittelfachs (1) als Bezug durchführt, wobei das Verfahren die folgenden Schritte umfaßt:

Prüfen (101) des Laufs des Kompressors (4) beim n-ten Zyklus des Kältegeräts und Berechnen der Laufzeit ($t_{1n}$) des Kompressors (4) beim Abschluß des Laufs des Kompressors (102) und des Werts der Zeit ($t_{3n}$) als verbrauchte Zeit nach dem Anhalten (103) des Kompressors durch eine Steuereinheit (5);

Übertragen der Temperatur des Frischlebensmittelfachs (1), die durch einen Temperatursensor (6) gemessen wurde, zur Steuereinheit (5) und Aktivieren (117) des Kompressors (4), wenn die Temperatur des Frischlebensmittelfachs (1) über einem durch den Hersteller definierten Schwellenwert liegt (104);

Ausgleichen des Prozent-Kompressorlaufzeitwerts $PCRT_{zeitweiliges-Ziel(n),}$ der die Zielbetriebsrate des Kompressors (4) ist, die sich beim n-ten Zyklus dynamisch zum Wert $PCRT_{Ziel}$ (118) verändert, der die wie durch den Hersteller vorbestimmte Zielbetriebsrate des Kompressors ist, und Beginnen des "n+1"-ten Betriebszyklus (201) ;

falls die Temperatur des Frischlebensmittelfachs (1) unter einem wie durch den Hersteller definierten Schwellenwert liegt (104), Berechnen des Werts $PCRT_{zeitweilig(n)}$, der die augenblickliche Betriebsrate des Kompressors (4), nachdem er anhält und bis eine Heizeinrichtung (3) eingeschaltet wird, beim n-ten Zyklus ist, durch Verwenden der Werte der Laufzeit ($t_{1n}$) des Kompressors (4) und der nach dem Anhalten des Kompressors (4) verbrauchten Zeit ($t_{3n}$), und Vergleichen des Werts $PCRT_{zeitweilig(n)}$ mit dem Wert $PCRT_{zeitweiliges-Ziel}$ (n-1) (106);

falls der Wert $PCRT_{zeitweilig(n)}$ größer als oder gleich wie der Wert $PCRT_{zeitweiliges-ziel}$ (n-1) ist (106) , Zurückkehren zu Schritt (101), bei dem die Laufzeit ($t_{1n}$) des Kompressors (4) durch die Steuereinheit (5) gemessen wird;

wenn der Wert $PCRT_{zeitweilig(n)}$ kleiner als der Wert $PCRT_{zeitweiliges-Ziel(n-1)}$ ist (106), Betätigen (107) der Heizeinrichtung (3) durch die Steuereinheit (5);

nach einem bestimmten Zeitraum im Anschluß an die Aktivierung der Heizeinrichtung (3), wenn die Temperatur des Frischlebensmittelfachs (1) ansteigt und einen Wert über einem durch den Hersteller bestimmten Schwellenwert erreicht (108), Aktivieren (109) des Kompressors (4) und Ausschalten (110) der Heizeinrichtung (3) durch die Steuereinheit (5);

Berechnen der Zeit ($t_{2n}$), die für das Neustarten des Kompressors (4) verbraucht wird, nachdem er angehalten hat (111) ;

Berechnen des Werts $PCRT_{tatsächlich(n)}$ (112), der die Betriebsrate des Kompressors (4) ist, die während des n-ten Zyklus verwirklicht wurde, und Vergleichen des Werts $PCRT_{tatsächlich(n)}$ mit dem Wert $PCRT_{ziel}$ (113), der ein bestimmter konstanter Wert ist, welcher den Zielwert der Betriebsrate des Kompressors zeigt, der durch den Hersteller als Ergebnis experimenteller Untersuchungen bestimmt ist;

falls der Wert $PCRT_{tatsächlich(n)}$ dem Wert $PCRT_{Ziel}$ gleich ist (113), Ausgleichen des Werts $PCRT_{zeitweiliges-Ziel(n)}$ auf den Wert $PCRT_{zeitweiliges-Ziel (n-1)}$ (116) ;

falls der Wert $PCRT_{tatsächlich(n)}$ kleiner als der Wert $PCRT_{Ziel}$ ist (113), Hinzufügen eines wie durch den Hersteller bestimmten konstanten Korrekturfaktors "Δ" zum Wert $PCRT_{zeitweiliges-Ziel (n-1)}$ (114) und Erhöhen des Werts $PCRT_{zeitweiliges-Ziel (n-1)}$ auf einen Δ-Wert, und Bereitstellen einer schnelleren Aktivierung der Heizeinrichtung im nächsten (n+1)-ten Zyklus, was zu einer früheren Aktivierung des Kompressors (4) führt;

falls der Wert $PCRT_{tatsächlich(n)}$ größer als der Wert $PCRT_{Ziel}$ ist (113), Abziehen des wie durch den Hersteller bestimmten Werts "Δ" vom Wert $PCRT_{zeitweilges-Ziel(n-1)}$ (115) , Verringern des Werts $PCRT_{zeitweiliges-Ziel (n-1)}$ auf einen Δ-Wert, und Bereitstellen einer langsameren Aktivierung der Heizeinrichtung (3) im nächsten (n+1)-ten Zyklus, was zu einer verzögerten Aktivierung des Kompressors (4) führt.

2. Verfahren zur Steuerung eines Kältegeräts nach Anspruch 1, wobei der Wert $PCRT_{zeitweilig(n)}$ durch Teilen des Werts $t_{1n}$ durch die Summe von $(t_{1n} + t_{3n})$ berechnet wird.

3. Verfahren zur Steuerung eines Kältegeräts nach Anspruch 1, wobei der Wert $PCRT_{tatsählich(n)}$ durch Teilen des Werts $t_{1n}$ durch die Summe von $(t_{1n} + t_{2n})$ berechnet wird.

**Revendications**

1. Procédé de commande de réfrigérateur pour un réfrigérateur qui effectue l'opération de refroidissement en prenant la température du compartiment réfrigérateur (1) comme référence, le procédé comprenant les étapes consistant à

vérifier le fonctionnement du compresseur (4) au $n^{ième}$ cycle du réfrigérateur (101) et à calculer le temps de fonctionnement $(t_{1n})$ du compresseur (4) (102) à la suite de l'exécution du fonctionnement du compresseur, et la valeur temporelle $(t_{3n})$ comme étant le temps écoulé après l'arrêt du compresseur (103) par une unité de commande (5) ;

transmettre la température du compartiment réfrigérateur (1) mesurée par un capteur de température (6) à l'unité de commande (5), et si la température du compartiment réfrigérateur (1) se trouve au-dessus d'une valeur seuil telle que définie par le fabricant (104), à activer le compresseur (4) (117) ;

équilibrer la valeur PCTR $_{temporaire\ cible\ (n)}$ du temps de fonctionnement du compresseur en pourcentage qui est le taux opérationnel cible du compresseur (4) qui varie dynamiquement au $n^{ième}$ cycle par rapport à la valeur PCTR cible (118) étant le taux opérationnel cible du compresseur tel que prédéterminé par le fabricant, et à commencer le « n+1 »$^{ième}$ cycle opérationnel (201) ;

si la température du compartiment réfrigérateur (1) se trouve en dessous d'une valeur seuil telle que définie par le fabricant (104), calculer la valeur du PCRT $_{temporaire\ (n)}$ qui est le taux opérationnel momentané du compresseur (4) après son arrêt et jusqu'à ce qu'un appareil de chauffage (3) soit mis en marche, au $n^{ième}$ cycle, en utilisant les valeurs du temps de fonctionnement $(t_{1n})$ du compresseur (4) et du temps $(t_{3n})$ écoulé après l'arrêt du compresseur (4) et à comparer la valeur du PCRT $_{temporaire\ (n)}$ à la valeur du PCRT temporaire cible (n-1) (106) ;

dans le cas où la valeur du PCRT temporaire (n) est supérieure ou égale à la valeur du PCRT temporaire cible (n-1) (106), retourner à l'étape (101) où le temps de fonctionnement $(t_{1n})$ du compresseur (4) est mesuré par l'unité de commande (5) ;

lorsque la valeur du PCRT $_{temporaire\ (n)}$ est inférieure à la valeur du PCRT temporaire cible (n-1) (106) , actionner l'élément chauffant (3) par l'unité de commande (5) (107) ;

après une certaine période, faisant suite à l'activation de l'élément chauffant (3) lorsque la température du compartiment réfrigérateur (1) augmente et lorsqu'elle atteint une valeur au-dessus d'une valeur seuil (108) telle que déterminée par le fabricant, activer le compresseur (4) (109) et à mettre l'élément chauffant (3) hors tension par l'unité de commande (5) (110) ;

calculer le temps $(t_{2n})$ écoulé pour le redémarrage du compresseur (4) après son arrêt (111) ;

calculer la valeur du PCRT $_{réel\ (n)}$ (112), qui est le taux opérationnel du compresseur (4) réalisé durant le $n^{ième}$ cycle et à comparer la valeur du PCRT $_{réel\ (n)}$ à la valeur du PCRT cible (113) qui est une valeur constante déterminée montrant la valeur cible du taux de fonctionnement du compresseur qui est déterminée par le fabricant à la suite d'études expérimentales ;

dans le cas où la valeur du PCRT $_{réel\ (n)}$ est égale à la valeur du PCRT $_{cible}$ (113), équilibrer la valeur du PCRT $_{temporaire\ cible\ (n)}$ par rapport à la valeur du PCRT $_{temporaire\ cible\ (n-1)}$ (116) ;

si la valeur du PCRT $_{réel\ (n)}$ est inférieure à la valeur du PCRT cible (113), ajouter un facteur de correction constant 'Δ' tel que déterminé par le fabricant à la valeur du PCRT $_{temporaire\ cible\ (n-1)}$ (114) et à augmenter la valeur du PCRT $_{temporaire\ cible\ (n)}$ à une valeur Δ, à fournir une activation plus rapide de l'élément chauffant (3) dans le cycle suivant (n+1), et à conduire par conséquent à une activation anticipée du compresseur (4) ;

si la valeur du PCRT $_{\text{réel (n)}}$ est supérieure à la valeur du PCRT $_{\text{cible}}$ (113), soustraire la valeur 'Δ' telle que déterminée par le fabricant de la valeur du PCRT $_{\text{temporaire cible (n-1)}}$ (115) , à réduire la valeur du PCRT $_{\text{temporaire cible (n)}}$ à une valeur Δ, à fournir une activation plus lente de l'élément chauffant (3) dans le cycle suivant (n+1) , et à conduire par conséquent à une activation retardée du compresseur (4).

2. Procédé de commande de réfrigérateur selon la revendication 1, dans lequel la valeur du PCRT $_{\text{temporaire (n)}}$ est calculée en divisant la valeur $t_{1n}$ par la somme de $(t_{1n} + t_{3n})$ .

3. Procédé de commande de réfrigérateur selon la revendication 1, dans lequel la valeur du PCRT $_{\text{réel (n)}}$ est calculée en divisant la valeur $t_{1n}$ par la somme de $(t_{1n} + t_{2n})$.

Figure 1

EP 1 325 271 B1

**Figure 2**

- 116 — $PCRT_{temporary\text{-}target(n)} = PCRT_{temporary\text{-}target(n-1)}$
- Start cycle n+1 — 201
- 115 — $PCRT_{temporary\text{-}target(n)} = PCRT_{temporary\text{-}target(n-1)} - D$
- Start cycle n+1 — 201
- 112 — Calculate the $PCRT_{actual(n)}$ value
- 113 — Compare the $PCRT_{actual(n)}$ value to the $PCRT_{target}$ value — Equal / High / Low
- 114 — $PCRT_{temporary\text{-}target(n)} = PCRT_{temporary\text{-}target(n-1)} + D$
- Start cycle n+1 — 201
- 107 — Start heater
- 108 — Is the refrigerator compartment temperature above the threshold value? — Y / N
- 109 — Start compressor
- 110 — Switch off the heater
- 111 — Calculate $t_{2n}$ value
- 117 — Start compressor
- 118 — $PCRT_{temporary\text{-}target(n)} = PCRT_{target}$
- Start n cycle
- 101 — Is the compressor running? — Y / N
- 102 — Calculate $t_{1n}$ value
- 103 — Determine $t_{3n}$ value
- 104 — Is the refrigerator compartment temperature above the threshold value? — Y / N
- 105 — Calculate the $PCRT_{temporary(n)}$ value
- 106 — Is $PCRT_{temporary(n)}$ equal to or greater than $PCRT_{temporary(n)\text{-}target(n-1)}$? — Y / N

**Figure 3**